# EUROPÄISCHE PATENTSCHRIFT

(11) **EP 0 975 167 B1**
(45) Veröffentlichungstag und Bekanntmachung des Hinweises auf die Patenterteilung: **17.10.2012**
(21) Anmeldenummer: 99440198.2
(22) Anmeldetag: 13.07.1999
(51) Int. Cl.: H04N 21/21, H04N 21/23, H04L 12/56

(54) **Verfahren zum Betrieb eines Servers sowie Server und Steuereinheit**
Method for using a server, server and control unit
Méthode pour utiliser un serveur, serveur et dispositif de commande

(30) Priorität: 14.07.1998 DE 19831516
(43) Veröffentlichungstag der Anmeldung: 26.01.2000
(73) Patentinhaber: Alcatel Lucent, 75007 Paris (FR)
(72) Erfinder: Wahl, Stefan, 71701 Schwieberdingen (DE)
(74) Vertreter: Wetzel, Emmanuelle

(56) Entgegenhaltungen:
- EP-A- 0 696 872
- EP-A- 0 701 198
- EP-A- 0 780 758
- WO-A-97/16023
- GB-A- 2 218 833
- US-A- 5 202 971
- US-A- 5 550 982
- US-A- 5 625 819
- US-A- 5 652 865

## Beschreibung

Die Erfindung betrifft ein Verfahren zum Betrieb eines Servers, der Teilnehmer mit Datenströmen verschiedenen Inhalts beliefert, nach dem Oberbegriff von Anspruch 1, einen Server nach dem Oberbegriff von Anspruch 10, und eine Steuereinheit nach dem Oberbegriff von Anspruch 11.

Die Erfindung geht von einem Video-on-Demand System aus, wie es beispielsweise in EP 0696872 A2 beschrieben ist.

Ein solches Video-on-Demand System besteht aus einen Video-Server, der über ein Kommunikationsnetz mit einer Vielzahl von Teilnehmern verbunden ist. Die Teilnehmer verfügen jeweils über eine Set-Top-Box, die mit einem Fernsehgerät verbunden ist. Der Video-Server verfügt über eine Vielzahl von Speichereinheiten, in denen Videofilme verschiedenen Inhalts abgespeichert sind. Die Speichereinheiten sind mit Video-Wiedergabeeinrichtungen versehen, die diese Video-Datensätze wiedergeben und den so erzeugten Strom von Video-Daten an einen anfordernden Teilnehmer senden. Der Video-Server verfügt weiter über eine Steuereinheit, die einem anfordernden Teilnehmer Videowiedergabe-Ressourcen zuordnet und das Senden des angeforderten Video-Datenstroms mittels der zugeordneten Ressourcen an den anfordernden Teilnehmer veranlaßt. Ressourcen, die nicht länger für eine Teilnehmer benötigt werden, werden als frei markiert. Die Zuordnung solcher freien Ressourcen erfolgt dann unter der Zielsetzung, einen Video-Datenstrom parallel an möglichst viele Teilnehmer zu senden und dadurch die zugeordneten Ressourcen möglichst gut auszunutzen.

Die Internationale Patentanmeldung Nr. WO97/16023 beschreibt einen Video File Server, der "video on demand" Dienstleistungen verbringen kann. Die Adresse der verschiedenen Videosegmenter, die eine Video Datei bilden, werden in einer verketteten Liste eingetragen.

US Patent Nr. 5,652,865 beschreibt eine verkettete Dateispeicherung in einem Computerspeichersystem. Insbesondere wird ein freier Speicherplatz mit einer Datei ausgefüllt und wenn die Datei kürzer als der freie Speichen platz ist, wird der übriggebliebene freie Platz in einer "frei-Liste" eingetragen, so dass der Speicherplatz optimiert wird.

Der Erfindung liegt nun die Aufgabe zugrunde, die Leistungsfähigkeit eines Servers zu verbessern, der Teilnehmer mit Datenströmen verschiedenen Inhalts beliefert.

Diese Aufgabe wird gelöst durch ein Verfahren zum Betrieb eines Servers nach der Lehre von Anspruch 1, einen Server nach der Lehre von Anspruch 10, und eine Steuereinheit nach der Lehre von Anspruch 11.

Der Erfindung liegt hierbei der Gedanke zugrunde, die Speichereinheiten, in denen die verschiedenen Inhalte gespeichert sind, mittels zweier Arten von Listen zu verwalten: Einer Besetzt-Liste, die für jeden verfügbaren Inhalt angelegt wird und der diejenigen Speichereinheiten zugeordnet werden, in denen der jeweilige Inhalt abgespeichert ist, und einer Frei Liste, der diejenigen Speichereinheiten zugeordnet sind, die zur Zeit nicht benötigt werden. Inhalt sind beispielsweise Videofilme, Musik oder sonstige Daten, die für einen Teilnehmer von Interesse sein könnten. Falls zur Belieferung eines Teilnehmers mit einem bestimmten Inhalt weitere Speichereinheiten benötigt werden, in denen der bestimmte Inhalt abgespeichert ist, so werden als Speichereinheiten hierfür zuerst solche Speichereinheiten der Frei Liste ausgewählt, die auch der Besetzt-Liste des bestimmten Inhalts zugeordnet sind.

Dadurch ergibt sich der Vorteil, daß der Inhalt einer Speichereinheit weit weniger oft auszuwechseln ist. Ein solcher Inhaltswechsel ist zum einen zeit - und ressourcenintensiv. Zum anderen ist die Speichereinheit während des Inhaltswechsel blockiert. Durch ein erfindungsgemäßen Betrieb eines Servers wird somit die Leistungsfähigkeit des Servers deutlich erhöht.

Vorteilhafte Ausgestaltungen der Erfindung sind den Unteransprüchen zu entnehmen.

Es ist hierbei vor allem vorteilhaft, die Speichereinheiten durch Objekte zu repräsentieren und die Frei-Liste und die Besetzt-Listen durch Verkettung dieser Objekte anzulegen. Dadurch ergibt sich eine Datenstruktur, mittels der das Betriebsverfahren einfach durchführbar ist.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Systems mit einem erfindungsgemäßen Server und einer erfindungsgemäßen Steuereinheit.
- Fig. 2: zeigt eine funktionelle Darstellung eines Ausschnitts aus einer von dem Server nach Fig. 1 verwendeten Datenstruktur.
- Fig. 3: zeigt eine detailierte funktionelle Darstellung der von dem Server nach Fig. 1 verwendeten Datenstruktur.

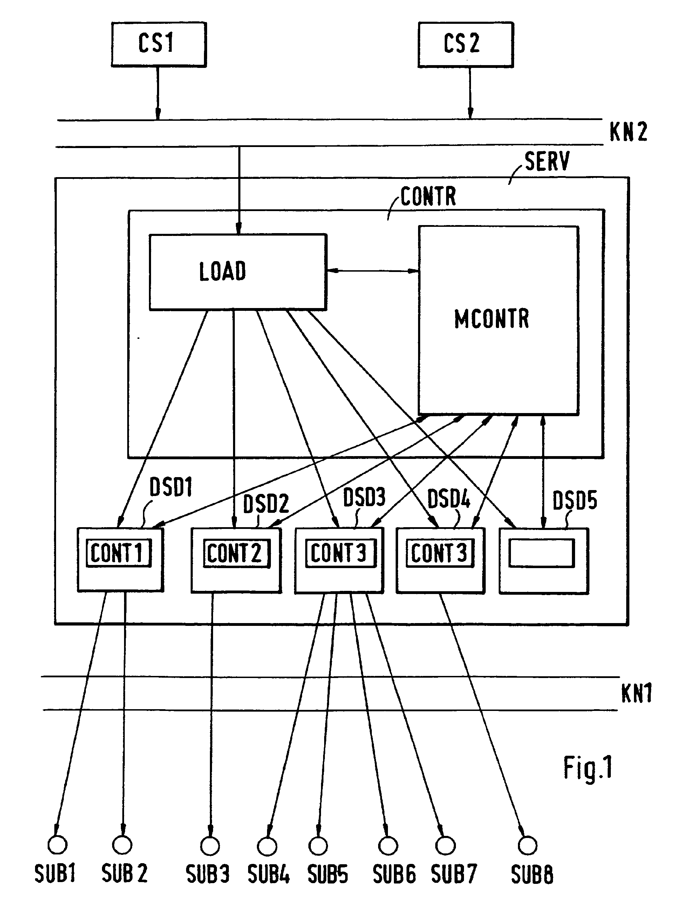

Fig. 1 zeigt die Server SERV, CS1 und CS2, die Kommunikationsnetze KN1 und KN2 und die Teilnehmer SUB1 bis SUB8. Die Teilnehmer SUB1 bis SUB8 sind über das Kommunikationsnetz KN1 mit dem Server SERV verbunden, der seinerseits über das Kommunikationsnetz KN2 mit den Servern CS1 und CS2 verbunden ist.

Die Server SERV, CS1 und CS2 werden jeweils von speziell ausgestalteten Computer Stationen gebildet. In dem Server SERV sind Datensätze mit verschiedenem Inhalt gespeichert, die von dem Server SERV ausgelesen und auf Anforderung als kontinuierlicher Datenstrom über das Kommunikationsnetz KN1 an die Teilnehmer SUB1 bis SUB8 gesendet werden.

Ein Datensatz bestehen hierbei jeweils aus Video-Daten, die einen bestimmten Inhalt beschreiben, beispielsweise um die Video-Daten eines speziellen Video-Filmes. Es ist jedoch auch möglich, daß ein Datensatz Multi-Media Daten, Audio-Daten oder sonstigen Daten umfaßt, die von den Endgeräten der Teilnehmer SUB1 bis SUB8 im wesentlichen synchron über ein entsprechendes Ausgabemittel an den jeweiligen Teilnehmer übermittelt werden.

Die Anzahl der Server CS1 bis CS2 ist beispielhaft gewählt. In den Servern CS1 bis CS2 sind eine Vielzahl von Datensätzen mit verschiedenen Inhalten gespeichert, von denen jeder einzelne auf Anforderung über das Kommunikationsnetz KN2 in den Server SERV oder in andere, ähnlich aufgebaute Server heruntergeladen werden kann.

Die Zahl der Teilnehmer SUB1 bis SUB8 ist beispielhaft gewählt. Jeder der Teilnehmer SUB1 bis SUB8 verfügt als Endgerät zur Kommunikation mit dem Server SERV über ein Videowiedergabegerät, beispielsweise ein Fernsehgerät, das mit einer Set-Top-Box zum Zugriff auf den Server SERV ausgestattet ist. Eine solches Endgerät und ein zugehöriges Kommunikationsnetz, das dieses Endgerät mit dem Server SERV verbindet, ist beispielsweise in dem Artikel "Das IVOD-Projekt Berlin: Anschlußtechnologie zur Bereitstellung von Diensten", R. Heidemann, Alcatel Telecom Rundschau, 3. Quartal 1996, Seiten 196 bis 200 beschrieben.

Es ist auch möglich, daß die Teilnehmer SUB1 bis SUB8 als Endgerät über eine Computer-Station verfügen, die über periphere Baugruppen zur Kommunikation über das Kommunikationsnetz KN1 und zur Ausgabe von von dem Server SERV bereitgestellten Inhalten verfügt. Solche Endgeräte sind beispielsweise Netzwerk-Computer, Personal Computer oder Info-Terminals.

Das Kommunikationsnetz KN1 besteht aus einem Zugangsnetz, über das die Endgeräte der Teilnehmer SUB1 bis SUB8 mittels Hybrid Fiber Coax, mittels Kabel-Modems, mittels ISDN (Integrated Service Digital Network) oder mittels ADSL (Asymmetrical Digital Subscriber Line) angeschlossen sind. Insbesonders, wenn eine größere Zahl von Teilnehmern an das Kommunikationsnetz KN1 angeschlossen sind, ist es hierbei vorteilhaft, daß das Kommunikationsnetz KN1 über mehrere Zugangsnetze, u. U. verschiedenartige Zugangsnetze, und ein Backbone-Netz verfügt, das die Zugangsnetze untereinander und mit dem Server SERV verbindet. Geeignete als Backbone-Netz wäre beispielsweise ein ATM (Asynchronous Transfer Mode) oder ein SDH (Synchrone Digitale Hierarchie) Netz.

Es ist auch möglich, daß die Endgeräte der Teilnehmer SUB1 bis SUB8 direkt über eine ATM Schnittstelle mit dem Kommunikationsnetz KN1 verbunden sind. Wenn es sich bei einem Endgerät um eine Computer Stationen handelt, ist es weiter vorteilhaft, wenn es sich bei dem Kommunikationsnetz KN2 um ein IP Netz(IP =Internet Protocol), beispielsweise um ein sogenanntes Fast Internet handelt.

Bei dem Kommunikationsnetz KN2 handelt es sich um ein breitbandiges Datennetz, beispielsweise um ein ATM, FDDI oder DQDB Netz (FDDI =Fiber Distributed Data Interface, DQDB =Distributed Queue Dual Bus).

Der Server SERV weist aus funktioneller Sicht mehrere Speichereinheiten, von denen in Fig. 1 beispielhaft die Speichereinheiten DSD1 bis DSD5 gezeigt sind, und eine Steuereinheit CONTR auf, die ihrerseits eine Speicherverwaltungseinheit MCONTR und eine Ladeeinheit LOAD aufweist.

Die Speichereinheiten DSD1 bis DSD5 verfügen jeweils über einen Speicher zum Abspeichern eines Inhalts. Die Speichereinheiten DSD1 bis DSD5 verfügen hierfür vorteilhafterweise über physikalisch getrennte Speicherbaugruppen, die jeweils über ausreichend Kapazität verfügen, einen Inhalt, z. B. einen Videofilm, vorzugsweise in digitaler Form abzuspeichern. Sie verfügen somit beispielsweise jeweils über ein Plattenlaufwerk oder über ihnen fest zugeordnete digitale Speicherchips. Es ist natürlich auch möglich, daß den Speichereinheiten DSD1 bis DSD5 logische Speicherbereiche einer gemeinsamen Speicherbaugruppe zugeordnet sind.

In den Speichereinheiten DSD1 bis DSD4 sind beispielsweise jeweils ein Inhalt CONT1, CONT2, CONT3 bzw. CONT3 und in der Speichereinheit DSD5 ist kein Inhalt abgespeichert. Auf die Speichereinheiten DSD1 bis DSD5 greifen Wiedergabe-Ressourcen zu. Wenn diese aktiviert sind, lesen sie den in der jeweiligen Speichereinheit gespeicherten Inhalt aus, geben ihn wieder und senden den sich so ergebenden kontinuierlichen Datenstrom über das Kommunikationsnetz KN1 an einen oder parallel an mehrere der Teilnehmer SUB1. Es ist hierbei vorteilhaft, daß Wiedergabe-Ressourcen fest einer Speichereinheit zugeordnet sind, jede Speichereinheit somit über eigene Wiedergabe-Ressourcen verfügt. Der Inhalt einer Speichereinheit ist so abgespeichert, daß er parallel mehrfach ausgelesen werden kann. Es können somit von einer Speichereinheit mehrere Teilnehmer gleichzeitig bedient werden. So beliefert beispielsweise die Speichereinheit DSD1 die Teilnehmer SUB1 und SUB2 mit dem Inhalt CONT1, die Speichereinheit DSD2 den Teilnehmer SUB3 mit dem Inhalt CONT2 und die Speichereinheiten DSD3 und DSD4 die Teilnehmer SUB4 bis SUB8 mit dem Inhalt CONT3.

Die Steuereinheit CONTR steuert das Bereitstellen von Inhalten und die Belieferung von Teilnehmern mit Inhalten. Es ist auch möglich, daß die Steuereinheit nicht nur für einen Server, sondern für mehrere Server zuständig ist und für all diese Server zentral diese Funktionen ausübt. Ein solche Steuereinheit kann dann auch Teil eines zentralen Verwaltungsknoten sein, der die Bereitstellung von Inhalten mittels einer ganzen Gruppe von Servern steuert.

Die Speicherverwaltungseinheit MCONTR verwaltet die Zuordnung der Speichereinheiten DSD1 bis DSD5 zu Teilnehmern. Empfängt die Speicherverwaltungseinheit MCONTR eine Anforderungsnachricht von einem Teilnehmer, mit der er einen bestimmten Inhalt anfordert, so wählt die Speicherverwaltungseinheit MCONTR eine der Speichereinheiten DSD1 bis DSD5 aus und veranlaßt diese, den anfordernden Teilnehmer mit dem angeforderten Inhalt zu beliefern. Ist es hierzu notwendig, einen neuen Inhalt in die ausgewählte Speichereinheit zu laden, so sendet sie eine entsprechende Steuernachricht an die Ladesteuerung LOAD.

Die Ladesteuerung LOAD lädt Inhalte in die Speichereinheiten DSD1 bis DSD5. Sie fordert hierzu die Inhalte von den zentralen Servern CS1 bis CS2 an, empfängt diese über das Breitbandnetz KN2 und lädt sie sodann in die entsprechende Speichereinheit. Wenn der zu ladende Inhalt bereits in einer anderen Speichereinheit des Servers SERV abgespeichert ist, so kopiert sie den Inhalt von dieser Speichereinheit in die zu ladende Speichereinheit. Es ist auch möglich, daß die Ladesteuerung LOAD über eine Datenbank verfügt, in der Kopien von Inhalten abgespeichert sind und Inhalte von dieser Datenbank in Speichereinheiten kopiert werden.

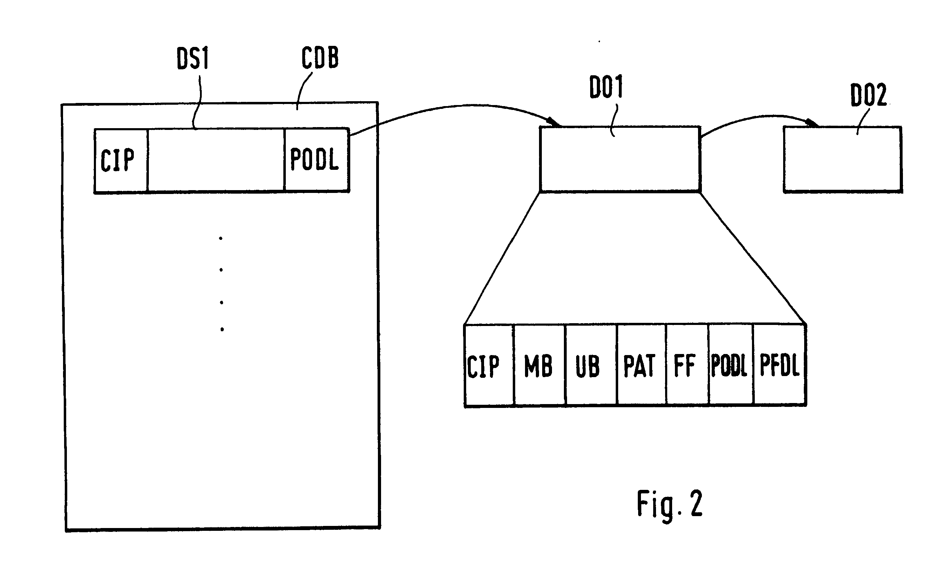

Anhand von Fig. 2 wird nun die detaillierte Funktionsweise der Speicherverwaltungseinheit MCONTR verdeutlicht.

Die Speicherverwaltungseinheit MCONTR ordnet Teilnehmern Speichereinheiten zu und führt hierzu im wesentlichen folgende Funktionen durch: Sie wählt eine Speichereinheit aus, die den angeforderten Inhalt an den anfordernden Teilnehmer zu liefern hat. Diese Wahl erfolgt unter der Zielsetzung, die Kapazität der Speichereinheiten möglichst optimal auszunutzen. Weiter ermittelt sie freie Speichereinheiten, die zur Zeit keinen Teilnehmer mit einem Inhalt beliefern, um in diesen freien Speichereinheiten neue Inhalte oder weitere Kopien von Inhalten abzuspeichern. Die Auswahl unter den freien Speichereinheiten erfolgt hierbei unter der Zielsetzung, Inhaltswechsel in Speichereinheiten möglichst zu vermeiden.

Zur Erfüllung dieser Funktionen führt die Speicherverwaltungseinheit MCONTR zweierlei Arten von Listen. Zum einen eine Besetzt Liste für jeden Inhalt, der in dem Server SERV verfügbar ist. In den Besetzt Listen sind jeweils diejenigen Speichereinheiten aufgeführt, in denen der jeweilige Inhalt zur Zeit abgespeichert ist. Zum anderen eine Frei-Liste, in der eine Speichereinheit zusätzlich eingetragen wird, sobald sie keinen Teilnehmer mehr mit einem Inhalt beliefert. Zur Realisierung dieser Listen wird vorteilhafterweise eine Datenstruktur mit zu Listen verketteten Objekten verwendet, wie sie in Fig. 2 gezeigt ist. Es ist natürlich auch möglich, diese Listen anders zu realisieren, beispielsweise als separate Listen einer Datenbank.

Fig. 2 zeigt eine Inhaltsdatenbank CDB und zwei Objekte DO1 und DO2.

Die Objekte DO1 und DO2 repräsentieren jeweils eine Speichereinheit. Für jede der Speichereinheiten des Servers SERV wird ein solches Objekt von der Speicherverwaltungseinheit MCONTR verwaltet. Der Aufbau dieser Objekte wird nun beispielhaft anhand des Objektes DO1 verdeutlicht.

Das Objekt DO1 weist sieben Datenfelder CIP, MB, UB, PAT, FF, PODL und PFDL auf. Das Datenfeld CIP enthält eine Inhaltskennung, die den in der Speichereinheit gespeicherten Inhalt beschreibt. Das Datenfeld MB enthält einen Wert, der die maximale Bandbreite der Speichereinheit, d. h. die maximale Anzahl der von ihr bereitstellbaren parallelen Datenströme, beschreibt. Das Datenfeld UB enthält einen Wert, der beschreibt, wieviel von der maximalen Bandbreite zur Zeit belegt ist. Das Datenfeld enthält einen Wert, der die voraussichtliche Zeit bis zum erneuten Anfordern des in der Speichereinheit gespeicherten Inhalts beschreibt. Die Datenfelder PODL und PFDL enthalten Zeiger, die auf andere Objekte verweisen. Ist kein solches Objekt vorhanden, so enthalten diese Datenfelder einen NIL-Zeiger. Das Datenfelder PODL enthält hierbei einen Zeiger für eine Besetzt Liste und das Datenfeld PFDL enthält einen Zeiger für die Frei Liste. Das Datenfeld FF enthält eine Statusvariable, die anzeigt, ob die Speichereinheit mit einem Inhalt belegt ist oder nicht.

Die Inhaltsdatenbank CDB besteht aus einer Liste von Datensätzen. Für jeden in dem Server SERV abgespeicherten Inhalt ist ein solche Datensatz in dieser Liste abgespeichert. Von diesen Datensätzen ist in Fig. 2 beispielhaft der Datensatz DS1 gezeigt. Der Datensatz DS1 weist unter anderen die Datenfelder CIP und PODL auf.

Die Besetzt-Listen werden somit wie folgt gebildet: Für jeden verfügbaren Inhalt ist ein Datensatz, beispielsweise der Datensatz DS1, in der Inhaltsdatenbank CDB abgelegt. Der Datensatz verweist jeweils auf das erste Objekt der zugeordneten Besetzt-Liste, das wiederum auf das zweite Objekt verweist usw. Das letzte Objekt der Liste hat einen NIL-Zeiger in seinem Datenfeld PODL.

Wenn eine weitere Kopie eines Inhalts lin einer Speichereinheit abgespeichert wird, so wird das zugehörige Objekt aus seiner bisherigen Besetzt-Liste entfernt und an die Besetzt Liste dieses Inhalts angehängt. Der Zeiger im Datenfeld PODL des in der alten Besetzt-Liste vorangehenden Objekts wird mit dem entsprechenden Zeiger des Objekts überschrieben. Der NIL-Zeiger des letzten Objekts der neuen Besetzt-Liste wird mit einem Zeiger auf dieses Objekt überschrieben und in das Datenfeld PODL dieses Objekts wird der NIL-Zeiger eingetragen, so daß dieses Objekt nun das neue letze Objekt dieser Besetzt Liste ist.

Wenn eine Speichereinheit nicht mehr länger ihren Inhalt Teilnehmern zur Verfügung stellt, wird das sie repräsentierende Objekt in die Frei-Liste eingebunden. Das Einbinden in die Frei Liste bedeutet dabei nicht, daß der in der Speichereinheit gespeicherte Inhalt gelöscht wird, sondern daß die Speichereinheit ein potentieller Kandidat dafür ist, daß der in ihr gespeicherte Inhalt durch einen anderen Inhalt ersetzt wird. Sobald die Speichereinheit wieder einem Teilnehmer zugeordnet wird und ihm ihren Inhalt zur Verfügung stellt, wird sie wieder aus der Frei Liste entfernt.

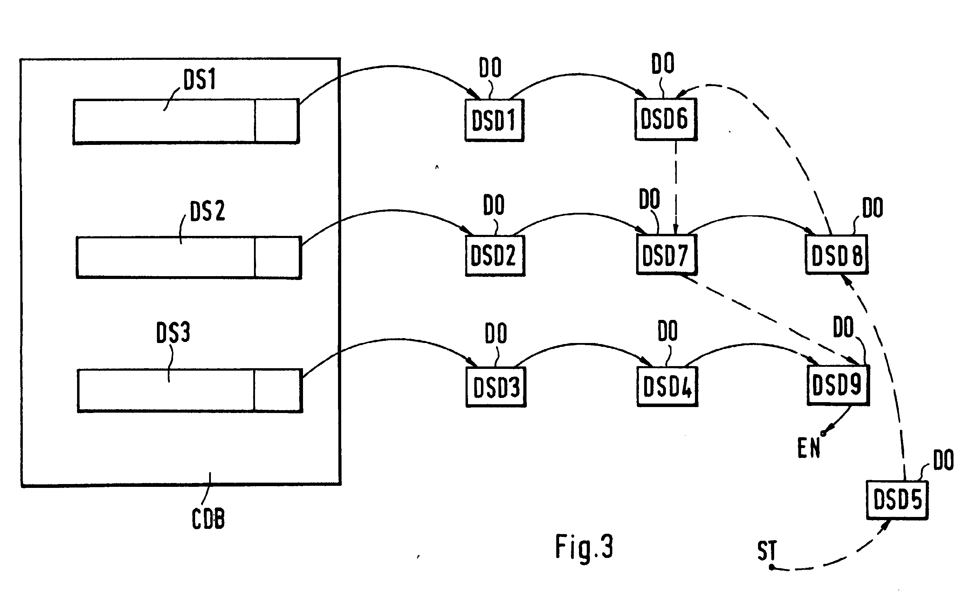

Das Hinzufügen und Löschen von Objekten zur bzw. aus der Frei Liste und den Besetzt Listen wird nun anhand von Fig. 3 verdeutlicht:

Fig. 3 zeigt die Inhaltsdatenbank CDB mit dem Datensatz DS1 und Datensätzen DS2 und DS3 sowie neun Objekten DO, die die Speichereinheiten DSD1 bis DSD5 und in Fig. 1 nicht gezeigte Speichereinheiten DSD6 bis DSD9 des Servers SERV repräsentieren. In den Speichereinheiten DSD6 bis DSD9 sind die Inhalte CONT1, CONT2, CONT2 bzw. CONT3 abgespeichert, die Inhalte werden jedoch zur Zeit an keinen Teilnehmer geliefert.

Die Datensätze DS1, DS2 und DS3 sind den Inhalten CONT1, CONT2 bzw. CONT3 zugeordnet. Der Datensatz DS1 verweist auf das die Speichereinheit DSD1 repräsentierende Objekt, das wiederum auf das die Speichereinheit DSD6 repräsentierende Objekt verweist. Dadurch wird die Besetzt Liste für den Inhalt CONT3 gebildet, der somit die Speichereinheiten DSD1 und DSD6 zugeordnet sind. Auf dieselbe Weise sind die Datensätze DSD2 und DSD3 mit den die Speichereinheiten DSD2, DSD7 und DSD8 bzw. DSD3, DSD4 und DSD9 repräsentierenden Objekten verkettet, wodurch die Besetzt Listen für die Inhalte CONT2 und CONT3 gebildet werden. In der Speichereinheit DSD5 ist noch kein Inhalt geladen, sie ist somit keiner der Besetzt Listen zugeordnet. Die Frei Liste wird durch eine Verkettung der den Speichereinheiten DSD5, DSD8, DSD6, DSD7 und DSD9 zugeordneten Objekte zwischen einem Start-Punkt ST und einem End-Punkt EN gebildet.

Objekte wie das der Speichereinheit DSD5, die der Frei Liste und keiner Besetzt Liste zugeordnet sind, weil beispielsweise noch kein Inhalt in ihnen abgespeichert ist, sind am Anfang der Frei-Liste angeordnet.

Für Speichereinheiten, die der Frei Liste und einer der Besetzt Listen zugeordnet sind, bestehen folgende zwei Möglichkeiten:
- Sie werden angewiesen, einen Teilnehmer mit ihrem Inhalt zu beliefern und werden damit aus der Frei Liste entfernt.
- Sie werden benötigt, Teilnehmer mit einem anderen als den in ihnen abgespeicherten Inhalt zu beliefern. Ein anderer Inhalt wird somit in sie geladen, sie werden damit einer anderen Besetzt Liste zugeordnet und aus der Frei Liste entfernt.

Es ist auch möglich, daß von der Steuereinheit MCONTR Speichereinheiten aufgrund von statistischen Berechnungen, die den Bandbreitenbedarf für einen bestimmten Inhalt im Voraus abschätzen, mit einem anderen Inhalt geladen werden und somit einer anderen Besetzt Liste zugeordnet werden, jedoch in der Frei Liste verbleiben. Damit wird es möglich, sehr schnell auf Anforderung von Teilnehmern zu reagieren.

Wenn ein Teilnehmer die Lieferung eines Inhalts anfordert, so wird von der Steuereinheit MCONTR zuerst das erste Objekt der dem angeforderten Inhalt zugeordneten Besetzt Liste ausgewählt. Falls die freie Bandbreite der von diesem Objekt repräsentierten Speichereinheit nicht ausreicht, die Anforderung zu erfüllen, wird das nächste Objekte der Besetzt Liste ausgewählt usw. . Dadurch wird erreicht, daß die für eine Speichereinheit verfügbare Bandbreite voll ausgenutzt wird, bevor die nächste Speichereinheit der Besetzt Liste verwendet wird. Eine maximale Zahl von freien Speichereinheiten stehen so der nächsten Anforderung zur Verfügung.

Handelt es sich bei einem ausgewählten Objekt um ein Objekt, das auch der Frei Liste zugeordnet ist, so wird es aus der Frei Liste entfernt. Ist kein weiteres Objekt mehr in der Besetzt Liste des angeforderten Inhalt enthalten, so wird das erste Objekt der Frei Liste ausgewählt und der angeforderte Inhalt in die von diesem Objekt repräsentierte Speichereinheit geladen. Das Objekt wird an das Ende der Besetzt Liste angehängt und aus der Frei Liste entfernt. Haben die Speichereinheiten, die bereits Teilnehmer mit dem Inhalt beliefern, keine freien Kapazitäten mehr, werden dadurch automatisch zuerst diejenigen Objekte der Frei Liste ausgewählt, die auch der Besetzt Liste des Inhalts zugeordnet sind. Erst dann wird ein Objekt der Frei Liste ausgewählt, bei dem ein Inhaltswechsel notwendig wird. Dadurch wird die Anzahl der Inhaltswechsel minimiert.

Es ist vorteilhaft, freiwerdende Speichereinheiten nicht dem Ende der Frei Liste zuzuordnen, sondern ihre Position innerhalb der Frei List aufgrund folgender Berechnungen zu bestimmten:

Ist eine Speichereinheit keiner Besetzt Liste zugeordnet, so wird sie am Anfang der Frei Liste angeordnet. Ein solcher Zustand wird durch die in dem Datenfeld FF eingetragene Statusvariable angezeigt. Den Anfang der Frei Liste bilden somit die Objekte die solche Speichereinheiten repräsentieren.

Die restlichen Objekte der Frei Liste sind nach der Reihenfolge der Wahrscheinlichkeit sortiert, daß der Inhalt der von ihnen repräsentierte Speichereinheit demnächst benötigt wird oder nicht. Ist diese Wahrscheinlichkeit hoch, wird das zugehörige Objekt am Ende der Frei Liste angeordnet. Die Einordnung in die Frei Liste wird hierbei mittels dem in dem Datenfeld PAT eingetragen Parameter gesteuert, der ein Maß für die Zugriffswahrscheinlichkeit ist. Dieser Parameter wird jedesmal neu berechnet, wenn das Objekt, in dem er eingetragen ist, der Frei Liste zugeordnet wird.

## Patentansprüche

1. Verfahren zum Betrieb eines Servers (SERV), der Teilnehmer (SUB1 bis SUB8) mit Datenströmen verschiedenen Inhalts (CONT1 bis CONT3) beliefert, wobei bei dem Verfahren die verschiedenen Inhalte (CONT1 bis CONT3) jeweils in einer Speichereinheit oder in mehreren Speichereinheiten des Servers abgespeichert werden und zur Belieferung eines Teilnehmers (SUB1 bis SUB8) mit einem Datenstrom eines bestimmten Inhalts der bestimmte Inhalt aus der Speichereinheit oder aus einer der Speichereinheiten, in der er abgespeichert ist, ausgelesen und als Datenstrom an den Teilnehmer gesendet wird,
**dadurch gekennzeichnet, daß** für jeden der in den Speichereinheiten (DSD1 bis DSD9) des Servers (SERV) gespeicherten Inhalte (CONT1 bis CONT3) eine Besetzt-Liste angelegt wird, daß jede Speichereinheit (DSD1 bis DSD4, DSD6 bis DSD9), in der ein Inhalt abgespeichert wird, der Besetzt Liste des in ihr abgespeicherten Inhalts zugeordnet wird, daß jede Speichereinheit (DSD5 bis DSD9), die zur Zeit nicht zur Belieferung eines Teilnehmers benötigt wird, einer Frei-Liste zugeordnet wird, und daß, wenn zur Belieferung eines Teilnehmers mit einem bestimmten Inhalt eine weitere Speichereinheit benötigt wird, hierfür eine der Frei-Liste zugeordnete Speichereinheit ausgewählt wird, wobei zuerst versucht wird, eine der Frei-Liste zugeordneten Speichereinheit auszuwählen, die auch der Besetzt-Liste des bestimmten Inhalts zugeordnet ist.

2. Verfahren nach Anspruch 1, **dadurch gekennzeichnet, daß**, wenn die Belieferung eines Teilnehmers mit einem bestimmten Inhalt angefordert wird, die Speichereinheiten gemäß der Reihenfolge, in der sie in der Besetzt-Liste des bestimmten Inhalts angeordnet sind, überprüft werden, ob sie noch Kapazität für die Belieferung eines weiteren Teilnehmers besitzen und die erste Speichereinheit mit ausreichend Kapazität zur Erfüllung der Anforderung ausgewählt wird.

3. Verfahren nach Anspruch 1, **dadurch gekennzeichnet, daß** eine Speichereinheit bei der Zuordnung zu einer der Besetzt-Listen dem Ende dieser Besetzt-Liste zugeordnet wird.

4. Verfahren nach Anspruch 1, **dadurch gekennzeichnet, daß** eine Speichereinheit bei der Zuordnung zur Frei-Liste dem Ende der Frei-Liste zugeordnet wird.

5. Verfahren nach Anspruch 1, **dadurch gekennzeichnet, daß** eine Speichereinheit bei der Zuordnung zur Frei-Liste abhängig von der Wahrscheinlichkeit, daß sie ihren Inhalt an einen Teilnehmer liefern muß, innerhalb der Frei-Liste eingeordnet wird.

6. Verfahren nach Anspruch 1, **dadurch gekennzeichnet, daß**, wenn eine Speichereinheit der Frei-Liste ausgewählt wird, die nicht der Besetzt-Liste des bestimmten Inhalts zugeordnet ist der bestimmte Inhalt von einem Speicher des Servers in die ausgewählte Speichereinheit kopiert wird.

7. Verfahren nach Anspruch 1, **dadurch gekennzeichnet, daß**, wenn eine Speichereinheit der Frei-Liste ausgewählt wird, die nicht der Besetzt-Liste des bestimmten Inhalt zugeordnet ist, der bestimmte Inhalt von einem zentralen Server in die ausgewählte Speichereinheit geladen wird.

8. Verfahren nach Anspruch 1, **dadurch gekennzeichnet, daß** jede Speichereinheit (DSD1 bis DSD9) durch ein Objekt (OD, OD1, OD2) repräsentiert wird und die Frei-Liste und die Besetzt-Listen durch Verkettung dieser Objekte angelegt werden.

9. Verfahren nach Anspruch 8, **dadurch gekennzeichnet, daß** für jeden Inhalt (CONT1 bis CONT3), der in einer der Speichereinheiten (DSD1 bis DSD9) des Servers gespeichert ist, ein Datensatz (DS1 bis DS3) in einer Inhalts-Datenbank (CDB) eingetragen wird, der über einen Zeiger auf das erste Objekt (OD1, OD) der Besetzt-Liste des Inhalts verfügt.

10. Server (SERV), der der Belieferung von Teilnehmern (SUB1 bis SUB8) mit Datenströmen verschiedenen Inhalts (CONT1 bis CONT3) dient, wobei der Server mit mehreren Speichereinheiten (DSD1 bis DSD9) zum Abspeicherung von Inhalten (CONT1 bis CONT3), die auf Anforderung ausgelesen und als Datenstrom an Teilnehmer gesendet werden, und mit einer Speicherverwaltungseinheit (MCONTR) zum Zuordnen von Speichereinheiten (DSD1 bis DSD9) zu Teilnehmern (SUB1 bis SUB8) versehen ist,
**dadurch gekennzeichnet, daß** die Speicherverwaltungseinheit (MCONTR) so ausgestaltet ist, daß sie für jeden der in den Speichereinheiten (DSD1 bis DSD9) des Servers gespeicherten Inhalte eine Besetzt-Liste anlegt, daß sie jede Speichereinheit (DSD1 bis DSD4, DSD6 bis DSD9), in der ein Inhalt abgespeichert wird, der Besetzt Liste des in ihr abgespeicherten Inhalts zuordnet, daß sie jede Speichereinheit (DSD5 bis DSD9), die zur Zeit nicht zur Belieferung eines Teilnehmers benötigt wird, einer Frei-Liste zuordnet, und daß sie, wenn zur Belieferung eines Teilnehmers mit einem bestimmten Inhalt eine weitere Speichereinheit benötigt wird, hierfür eine der Frei-Liste zugeordneten Speichereinheit auswählt, wobei sie zuerst versucht, eine der Frei-Liste zugeordneten Speichereinheit auszuwählen, die auch der Besetzt-Liste des bestimmten Inhalts zugeordnet ist.

11. Steuereinheit (CONTR) zur Verwaltung von ein oder mehren Servern, die der Belieferung von Teilnehmern (SUB1 bis SUB8) mit Datenströmen verschiedenen Inhalts (CONT1 bis CONT3) dienen und hierzu mehreren Speichereinheiten (DSD1 bis DSD9) zum Abspeicherung von Inhalten (CONT1 bis CONT3) aufweisen, die auf Anforderung ausgelesen und als Datenstrom an Teilnehmer gesendet werden, wobei die Steuereinheit (CONTR) mit einer Speicherverwaltungseinheit (MCONTR) zum Zuordnen von Speichereinheiten (DSD1 bis DSD9) zu Teilnehmern (SUB1 bis SUB8) versehen ist,
**dadurch gekennzeichnet, daß** die Speicherverwaltungseinheit (MCONTR) so ausgestaltet ist, daß sie für jeden der in den Speichereinheiten (DSD1 bis DSD9) gespeicherten Inhalte eine Besetzt-Liste angelegt, daß sie jede Speichereinheit (DSD1 bis DSD4, DSD6 bis DSD9), in der ein Inhalt abgespeichert wird, der Besetzt-Liste des in ihr abgespeicherten Inhalts zuordnet, daß sie jede Speichereinheit (DSD5 bis DSD9), die zur Zeit nicht zur Belieferung eines Teilnehmers benötigt wird, einer Frei-Liste zuordnet, und daß sie, wenn zur Belieferung eines Teilnehmers mit einem bestimmten Inhalt eine weitere Speichereinheit benötigt wird, hierfür eine der Frei-Liste zugeordneten Speichereinheit auswählt, wobei sie zuerst versucht, eine der Frei-Liste zugeordneten Speichereinheit auszuwählen, die auch der Besetzt-Liste des bestimmten Inhalts zugeordnet ist.

## Claims

1. Method of operating a server (SERV), subscribers (SUB1 to SUB8) supplied with data streams having different contents (CENT1 to CONT3), in which the different contents (CENT1 to CONT3) are respectively stored with the method in a memory unit or several memory units of the server, and, in order to supply a subscriber (SUB1 to SUB8) with a data stream of a specific content of the specific contents, the data steam is extracted from the memory unit or memory units in which it is stored and is transmitted to the subscriber as a data stream, **characterised in that** a working list is created for each of the contents (CONT1 to CONT3) stored in the memory units (DSD1 to DSD9) of the server (SERV), **in that** each memory unit (DSD1 to DSD4, DSD6 to DSD9), in which a content is stored, is assigned to the working list of the content stored therein, **in that** each memory unit (DSD5 to DSD9) that is not at present needed to supply a subscriber is assigned to a free list and **in that**, when a further memory unit is required to supply a subscriber with a specific content, a memory unit assigned for this purpose to the free list is selected, whereby it is first attempted to select a memory unit assigned to the free list that is also assigned to the working list of the specific content.

2. Method according to Claim 1, **characterised in that** when a request is made to supply a subscriber with a specific content, the memory units are scanned, in the order in which they are assigned to the working list of the specific content, as to whether they still have the capacity to supply a further subscriber, and the first memory unit with sufficient capacity to satisfy the request is selected.

3. Method according to Claim 1, **characterised in that**, when being assigned to one of the working lists, a memory unit is assigned to the end of that working list.

4. Method according to Claim 1, **characterised in that**, when being assigned to the free list, a memory unit is assigned to the end of that free list.

5. Method according to Claim 1, **characterised in that**, when being assigned to the free list, a memory unit is located in the free list according to the probability with which it must supply its content to a subscriber.

6. Method according to Claim 1 **characterised in that**, when a memory unit, not assigned to the working list of the specific content, is selected from the free list, the specific content is copied from a memory in the server to the selected memory unit.

7. Method according to Claim 1 **characterised in that**, when a memory unit, not assigned to the working list of the specific content, is selected from the free list, the specific content is downloaded from a central server into the selected memory unit.

8. Method according to Claim 1 **characterised in that** each memory unit (DSD1 to DSD9) is represented by an object (OD, OD1, OD2) and the free list and the working lists are created by linking these objects.

9. Method according to Claim 8, **characterised in that**, for each content (CENT1 to COUNT3) stored in one of the memory units (DSD1 to DSD9) of the server, a data set (DS1 to DS3) is entered into a contents database (CDB) having a pointer to the first object (OD1, OD) of the content working list.

10. Server (SERV), serving to supply subscribers (SUB1 to SUB8) with data streams having different contents (CENT1 to CONT3), whereby the server is provided with several memory units (DSD1 to DSD9) for storing contents (CENT1 to CONT3), which are extracted on request and transmitted as data streams to subscribers, and with a memory control unit (MCONTR) for assigning memory units (DSD1 to DSD9) to subscribers (SUB1 to SUB8), **characterised in that** the memory control unit (MCONTR) is configured such that it creates a working list for each of the contents stored in the memory units (DSD1 to DSD9) of the server, **in that** it assigns each memory unit (DSD1 to DSD4, DSD6 to DSD9), in which a content is stored, to the working list of the content stored therein, **in that** it assigns each memory unit (DSD5 to DSD9) that is not at present needed to supply a subscriber to a free list and **in that**, when a further memory unit is required to supply a subscriber with a specific content, a memory unit assigned to the free list is selected, whereby it first attempts to select a memory unit assigned to the free list that is also assigned to the working list of the specific content.

11. Control unit (CONTR) for controlling one or several servers serving to supply subscribers (SUB1 to SUB8) with data streams having different contents (CONT1 to COUNT3) and having for that purpose several memory units (DSD1 to DSD9) for storing contents (CENT1 to CONT3), that are extracted on request and transmitted as data streams to subscribers, whereby the control unit (CONTR) is provided with a memory control unit (MCONTR) for assigning memory units (DSD1 to DSD9) to subscribers (SUB1 to SUB8), **characterised in that** the memory control unit (MCONTR) is configured such that it creates a working list for each of the contents stored in the memory units (DSD1 to DSD9) of the server, **in that** it assigns each memory unit (DSD1 to DSD4, DSD6 to DSD9), in which a content is stored, to the working list of the content stored therein, **in that** it assigns each memory unit (DSD5 to DSD9) that is not at present needed to supply a subscriber to a free list and **in that**, when a further memory unit is required to supply a subscriber with a specific content, a memory unit assigned to the free list is selected for this purpose, whereby it first attempts to select a memory unit assigned to the free list that is also assigned to the working list of the specific content

## Revendications

1. Procédé pour exploiter un serveur (SERV) qui fournit des flux de données comprenant différents contenus (CONT1 à CONT3) à des abonnés (SUB1 à SUB8), selon lequel les différents contenus (CONT1 à CONT3) sont respectivement mémorisés dans une unité de mémorisation ou plusieurs unités de mémorisation du serveur et pour fournir un flux de données d'un contenu spécifique à un abonné (SUB1 à SUB8), le contenu spécifique étant sélectionné dans l'unité de mémorisation ou l'une des unités de mémorisation dans laquelle il est mémorisé et envoyé sous forme de flux de données à l'abonné, **caractérisé en ce qu'**une Liste-Occupé est appliquée pour chacun des contenus (CONT1 à CONT3) mémorisés dans les unités de mémorisation (DSD1 à DSD9) du serveur (SERV), chaque unité de mémorisation (DSD1 à DSD4, DSD6 à DSD9) dans laquelle un contenu est mémorisé est associée à la Liste-Occupé du contenu mémorisé dans ladite unité de mémorisation, chaque unité de mémorisation (DSD15 à DSD9), qui n'est pas temporairement nécessaire pour fournir un abonné, est associée à une Liste-Libre, et **en ce que**, lorsqu'une unité de mémorisation supplémentaire est nécessaire pour fournir un contenu spécifique à un abonné, une unité de mémorisation associée à la Liste-Libre est sélectionnée à cet effet, sachant qu'on essaie d'abord de sélectionner une unité de mémorisation associée à la Liste-Libre, laquelle unité de mémorisation est également associée à la Liste-Occupé du contenu spécifique.

2. Procédé selon la revendication 1, **caractérisé en ce que**, lorsqu'on demande de fournir un contenu spécifique à un abonné, on vérifie si les unités de mémorisation, conformément à l'ordre dans lequel elles sont disposées sur la Liste-Occupé, possèdent encore de la capacité pour fournir un autre abonné et la première unité de mémorisation ayant suffisamment de capacité pour satisfaire à la demande est sélectionnée.

3. Procédé selon la revendication 1, **caractérisé en ce qu'**une unité de mémorisation est associée, lors de l'association à l'une des Listes-Occupé, à l'extrémité de cette Liste-Occupé.

4. Procédé selon la revendication 1, **caractérisé en ce qu'**une unité de mémorisation est associée, lors de l'association à la Liste-Libre, à l'extrémité de la Liste-Libre.

5. Procédé selon la revendication 1, **caractérisé en ce qu'**une unité de mémorisation est classée, lors de l'association à la Liste-Libre, dans la Liste-Libre en fonction de la probabilité pour qu'elle fournisse son contenu à un abonné.

6. Procédé selon la revendication 1, **caractérisé en ce que**, lorsqu'une unité de mémorisation de la Liste-Libre, qui n'est pas associée à la Liste-Occupé du contenu spécifique, est sélectionnée, le contenu spécifique est copié d'une mémoire du serveur dans l'unité de mémorisation sélectionnée.

7. Procédé selon la revendication 1, **caractérisé en ce que**, lorsqu'une unité de mémorisation de la Liste-Libre, qui n'est pas associée à la Liste-Occupé du contenu spécifique, est sélectionnée, le contenu spécifique est chargé d'un serveur central dans l'unité de mémorisation sélectionnée.

8. Procédé selon la revendication 1, **caractérisé en ce que** chaque unité de mémorisation (DSD1 à DSD9) est représentée par un objet (OD, OD1, OD2) et la Liste-Libre et les Listes-Occupé sont appliquées par le chaînage de ces objets.

9. Procédé selon la revendication 8, **caractérisé en ce que**, pour chaque contenu (CONT1 à CONT3), qui est mémorisé dans l'une des unités de mémorisation (DSD1 à DSD9) du serveur, un jeu de données (DS1 à DS3), qui dispose d'un pointeur d'un premier objet (OD1, OD) de la Liste-Occupé du contenu, est enregistré dans une base de données de contenus (CDB).

10. Serveur (SERV) qui sert à fournir des flux de données comprenant différents contenus (CONT1 à CONT3) à des abonnés (SUB1 à SUB8), le serveur étant doté de plusieurs unités de mémorisation (DSD1 à DSD19) pour mémoriser les contenus (CONT1 à CENT3) qui sont sélectionnées sur demande et envoyés sous forme de flux de données à des abonnés, et d'une unité de gestion de mémoire (MCONTR) pour associer des unités de mémorisation (DSD1 à DSD9) à des abonnés (SUB1 à SUB8), **caractérisé en ce que** l'unité de gestion de mémoire (MCONTR) est formée de sorte qu'elle applique une Liste-Occupé pour chacun des contenus mémorisés dans les unités de mémorisation (DSD1 à DSD9) du serveur, associe chaque unité de mémorisation (DSD1 à DSD4, DSD6 à DSD9), dans laquelle un contenu est mémorisé, à la Liste-Occupé du contenu mémorisé dans ladite unité de mémorisation, associe chaque unité de mémorisation (DSD5 à DSD9), qui n'est pas temporairement nécessaire pour fournir un abonné, à une Liste-Libre, et **en ce que**, lorsqu'une unité de mémorisation supplémentaire est nécessaire pour fournir un contenu spécifique à un abonné, elle sélectionne à cet effet une unité de mémorisation associée à la Liste-Libre, sachant qu'elle essaie d'abord de sélectionner une unité de mémorisation associée à la Liste-Libre, laquelle unité de mémorisation est également associée à la Liste-Occupé du contenu spécifique.

11. Unité de commande (CONTR) pour gérer un ou plusieurs serveurs qui servent à fournir des flux de données comprenant différents contenus (CONT1 à CONT3) à des abonnés (SUB1 à SUB8) et présentent à cette fin plusieurs unités de mémorisation (DSD1 à DSD9) pour mémoriser des contenus (CONT1 à CENT3) qui sont sélectionnés sur demande et envoyés sous forme de flux de données à des abonnés, l'unité de commande (CONTER) étant dotée d'une unité de gestion de mémoire (MCONTR) pour associer des unités de mémorisation (DSD1 à DSD9) à des abonnés (SUB1 à SUB88), **caractérisée en ce que** l'unité de gestion de mémoire (MCONTR) est formée de sorte qu'elle applique une Liste-Occupé pour chacun des contenus mémorisés dans les unités de mémorisation (DSD1 à DSD9), associe chaque unité de mémorisation (DSD1 à DSD4, DSD6 à DSD9), dans laquelle un contenu est mémorisé, à la Liste-Occupé du contenu mémorisé dans ladite unité de mémorisation, associe chaque unité de mémorisation (DSD5 à DSD9), qui n'est pas temporairement nécessaire pour fournir un abonné, à une Liste-Libre, et **en ce que**, lorsqu'une unité de mémorisation supplémentaire est nécessaire pour fournir un contenu spécifique à un abonné, elle sélectionné à cette fin une unité de mémorisation associée à la Liste-Libre, sachant qu'elle essaie d'abord de sélectionner une unité de mémorisation associée à la Liste-Libre, laquelle unité de mémorisation est également associée à la Liste-Occupé du contenu spécifique.
